# FASCICULE DE BREVET EUROPEEN

(11) **EP 3 075 020 B1**
(45) Date de publication et mention de la délivrance du brevet: **06.09.2017**
(21) Numéro de dépôt: 14821757.3
(22) Date de dépôt: 01.12.2014
(51) Int. Cl.: H01M 8/0286, H01M 8/0273, H01M 8/1004

(54) **PROCEDE DE FABRICATION D'UN ASSEMBLAGE MEMBRANE/ELECTRODES COMPORTANT DES RENFORTS**
VERFAHREN ZUR HERSTELLUNG EINER MEMBRANELEKTRODENANORDNUNG MIT VERSTÄRKUNGEN
METHOD FOR MANUFACTURING A MEMBRANE/ELECTRODE ASSEMBLY COMPRISING REINFORCEMENTS

(30) Priorité: 29.11.2013 FR 1361815
(43) Date de publication de la demande: 05.10.2016
(73) Titulaire: Commissariat à l'Energie Atomique et aux Energies Alternatives, 75015 Paris (FR)
(72) Inventeur: VINCENT, Rémi, F-38000 Grenoble (FR); TARD, Julien, F-38070 Saint-Quentin-Fallavier (FR); TREMBLAY, Denis, F-38340 Pommiers-la-Placette (FR)
(74) Mandataire: GIE Innovation Competence Group
(86) Numéro de dépôt international: PCT/FR2014/053090
(87) Numéro de publication internationale: WO 2015/079189

(56) Documents cités:
- US-A1- 2005 208 361
- US-A1- 2008 105 354
- US-A1- 2009 162 734
- US-A1- 2011 177 423

## Description

L'invention concerne les membranes échangeuses de protons (dites PEM pour Proton Exchange Membrane en langue anglaise), utilisées par exemple dans des piles à combustible ou des électrolyseurs.

Une pile à combustible est un dispositif électrochimique qui convertit de l'énergie chimique directement en énergie électrique. Du dihydrogène est utilisé comme combustible de la pile à combustible. Le dihydrogène est oxydé et ionisé sur une électrode de la pile et du dioxygène de l'air est réduit sur une autre électrode de la pile. La réaction chimique produit de l'eau au niveau de la cathode, de l'oxygène étant réduit et réagissant avec les protons. Le grand avantage de la pile à combustible est d'éviter des rejets de composés polluants atmosphériques sur le lieu de génération d'électricité.

Les piles à combustible à membrane d'échange de protons, dites PEM, présentent des propriétés de compacité particulièrement intéressantes. Chaque cellule comprend une membrane électrolytique permettant seulement le passage de protons et non le passage des électrons. La membrane comprend une anode sur une première face et une cathode sur une deuxième face pour former un assemblage membrane/électrodes dit AME.

Au niveau de l'anode, le dihydrogène est ionisé pour produire des protons traversant la membrane. Les électrons produits par cette réaction migrent vers une plaque d'écoulement, puis traversent un circuit électrique externe à la cellule pour former un courant électrique.

La pile à combustible peut comprendre plusieurs cellules, séparées par des plaques dites bipolaires. L'AME est disposée entre deux plaques bipolaires. Les plaques bipolaires peuvent comprendre des canaux et orifices pour guider les réactifs et les produits vers/depuis l'AME. Les plaques sont également électriquement conductrices pour former des collecteurs des électrons générés au niveau de l'anode.

Les procédés d'assemblage de la pile à combustible, et en particulier les procédés de fabrication de l'AME, ont une importance déterminante sur les performances de la pile à combustible et sur sa durée de vie.

Le document US2008/0105354 décrit un tel procédé d'assemblage membrane/électrodes pour une pile à combustible. L'assemblage membrane/électrodes formé comporte des renforts. Chaque renfort entoure les électrodes. Les renforts sont formés à partir de films polymères et renforcent l'assemblage membrane/électrodes, par exemple au niveau des arrivées de gaz et de liquide de refroidissement. Les renforts présentent des canaux d'écoulement des différents fluides, placés en regard des canaux d'écoulement des plaques d'écoulement. Les renforts facilitent la manipulation de l'assemblage membrane/électrodes pour éviter sa détérioration. Les renforts limitent également les variations dimensionnelles de la membrane en fonction de la température et de l'humidité. En pratique, les renforts se superposent à la périphérie des électrodes, afin de limiter le phénomène de perméation de gaz à l'origine d'une détérioration de l'assemblage membrane/électrodes.

Selon ce procédé, on réalise un premier renfort en formant au préalable une ouverture dans la partie médiane d'un film polymère. Le premier renfort comporte un adhésif sensible à la pression sur une face. On récupère un assemblage membrane/électrodes et l'on vient placer l'ouverture du premier renfort à l'aplomb d'une première électrode. Le premier renfort recouvre la périphérie de cette première électrode.

On rapporte un second renfort identique au premier. On vient placer l'ouverture de ce second renfort à l'aplomb de la deuxième électrode. Ce second renfort recouvre la périphérie de la deuxième électrode. Deux films polymères viennent ainsi prendre en sandwich la bordure de la membrane. Chacun des films polymère comporte de l'adhésif sensible à la pression. L'adhésif de chaque film est mis en contact avec l'adhésif de l'autre film, avec une face de la bordure de la membrane, et avec la bordure d'une électrode.

Un pressage à chaud est ensuite réalisé de sorte que l'adhésif :
- solidarise les renforts à la membrane et à la bordure des électrodes ;
- solidarise les renforts entre eux.

Des canaux d'écoulement sont ensuite ménagés à la périphérie des renforts afin de permettre des écoulements de fluides.

Des première et deuxième couches de diffusion gazeuses sont ensuite positionnées en contact respectivement avec les première et deuxième électrodes.

Pour plusieurs raisons, la bordure de la membrane ne s'étend pas jusqu'à la bordure des renforts externes. En effet, on peut ainsi utiliser une membrane de surface plus réduite afin de réduire son coût sans affecter son efficacité. On limite en outre les risques de pollution de la zone active de la membrane par du liquide de refroidissement par capillarité depuis les ouvertures ménagées dans le renfort. Le liquide de refroidissement est fréquemment un mélange d'eau et de glycol.

L'adhésif des films de renfort sert alors non seulement à garantir la fixation de ces films mais également à assurer l'étanchéité entre les canaux d'écoulement de liquide de refroidissement et la bordure de la membrane, et à assurer l'étanchéité au gaz traversant les couches diffusion gazeuses.

Un tel procédé présente plusieurs inconvénients, tant pour une pile à combustible que pour un électrolyseur. Le choix de l'adhésif est primordial. En outre le procédé de fabrication est relativement complexe et nécessite de nombreuses étapes, susceptible de conduire au rebut de l'assemblage membrane/électrodes.

Par ailleurs, pour une pile à combustible, les couches de diffusion gazeuses peuvent être mal positionnées par rapport aux ouvertures des renforts. Une couche de diffusion gazeuse peut éventuellement chevaucher un joint d'un canal d'écoulement, ce qui conduit à des fuites. Pour pallier ce problème, on accroît fréquemment la distance entre les canaux d'écoulement et les couches de diffusion gazeuse, au détriment de la densité de puissance volumique de la pile à combustible. US 2009/162734 A1 décrit un procédé continu pour la formation d'une structure de renfort autour d'un assemblage membrane/électrode dans lequel les parties sont unies au moyen d'adhésifs photo-réticulés; la structure de renfort est découpée après adhésion des deux parties par, entre autres, un faisceau laser.

Il existe donc un besoin pour un procédé de fabrication d'un assemblage membrane/électrodes muni de renforts, résolvant un ou plusieurs de ces inconvénients. L'invention porte ainsi sur un procédé de fabrication d'un assemblage membrane/électrodes tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- les figures 1 à 6 illustrent différentes étapes d'un exemple de procédé de fabrication d'un assemblage membrane/électrodes selon l'invention, dans le cas particulier d'une application à une pile à combustible ;
- la figure 7 est une vue de dessus d'un assemblage membrane/électrodes à l'issue de ces étapes.

L'invention va par la suite être décrite en détail dans un exemple de procédé de fabrication d'un assemblage membrane/électrodes d'un montage destiné en particulier à une pile à combustible. L'invention s'applique bien entendu également à un procédé de fabrication d'un assemblage membrane/électrodes destiné à d'autres applications, par exemple dans un électrolyseur.

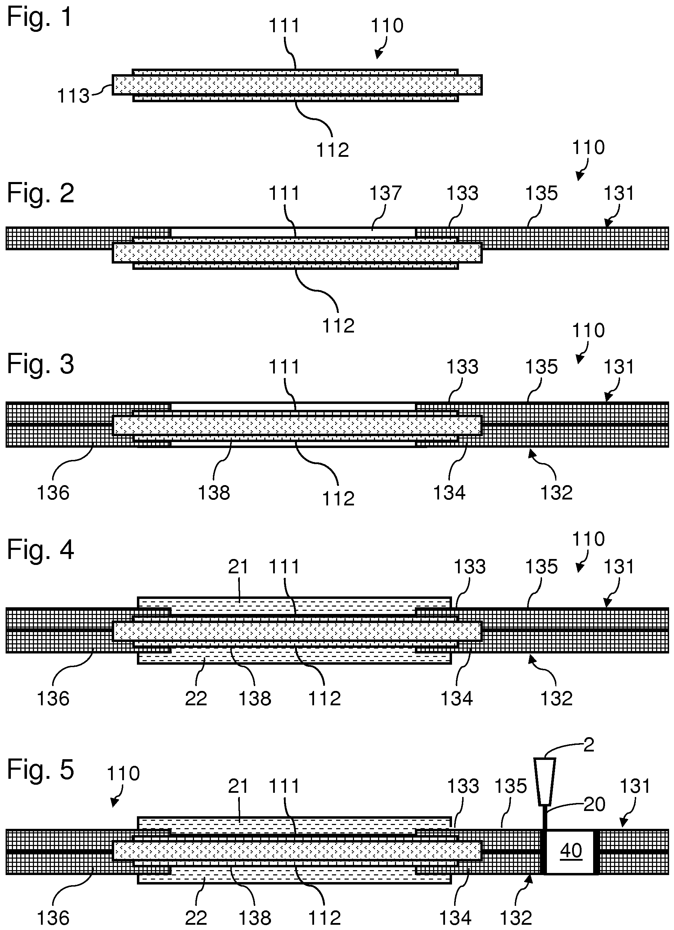

À la figure 1, on fournit un assemblage membrane/électrodes 110. L'assemblage membrane/électrodes 110 comporte de façon connue en soi :
- une membrane échangeuse de protons 113 ou membrane à électrolyte polymère ;
- une première électrode 111 (par exemple de l'anode) disposée sur une première face de l'électrolyte 113 ;
- une deuxième électrode 112 (par exemple la cathode) disposée sur une deuxième face de l'électrolyte 113.

La membrane 113 forme une membrane semi-perméable permettant une conduction protonique tout en étant imperméable aux gaz présents dans la cellule. La membrane 113 empêche également un passage des électrons entre les électrodes 111 et 112.

Dans cet exemple, la périphérie de la membrane 113 s'étend au-delà des électrodes 111 et 112. Dans cet exemple, les électrodes 111 et 112 sont préalablement fixées à la membrane 113, par exemple au moyen d'une ou plusieurs étapes de pressage à chaud.

À la figure 2, un premier renfort 131 est rapporté. Le renfort 131 comporte une partie de recouvrement 133 et une partie d'extension 135. Une ouverture médiane 137 est ici ménagée dans la partie de recouvrement 133. Le renfort 131 est positionné de sorte que la partie de recouvrement 133 se superpose à la périphérie de la membrane 113 et de sorte que la partie d'extension 135 s'étende latéralement au-delà de la membrane échangeuse de protons 113. Le renfort 131 est ici également positionné de sorte que l'électrode 111 soit accessible à travers l'ouverture médiane 137.

Dans cet exemple, le renfort 131 est en contact à la fois avec la membrane 113 et l'électrode 111. On peut également prévoir que la partie de recouvrement 133 soit en contact uniquement avec la membrane 113 ou avec l'électrode 111.

À la figure 3, un deuxième renfort 132 est rapporté. Le renfort 132 comporte une partie de recouvrement 134 et une partie d'extension 136. Une ouverture 138 est ici ménagée dans la partie de recouvrement 134. Le renfort 132 est positionné de sorte que la partie de recouvrement 134 se superpose à la périphérie de la membrane et de sorte que la partie d'extension 136 s'étende latéralement au-delà de la membrane échangeuse de protons 113. Le renfort 132 est ici également positionné de sorte que l'électrode 112 soit accessible à travers l'ouverture médiane 138. En outre, la partie d'extension 136 se superpose à la partie d'extension 135 du renfort 131.

Dans cet exemple, le renfort 132 est en contact à la fois avec la membrane et avec l'électrode 112. On peut également prévoir que la partie de recouvrement 134 soit en contact uniquement avec la membrane ou avec l'électrode 112.

Dans ce procédé de fabrication de l'assemblage membrane/électrodes 110 destiné à une pile à combustible, on peut également avantageusement rapporter une couche de diffusion gazeuse 21 (et éventuellement une couche de diffusion gazeuse 22 en contact avec l'électrode 112 à travers l'ouverture médiane 138) en contact avec l'électrode 111 à travers l'ouverture médiane 137, comme illustré à la figure 4. La couche de diffusion gazeuse 21 peut être solidarisée à l'électrode 111, par exemple par une étape de pressage à chaud. Dans le cas d'un tel pressage à chaud, on peut avantageusement solidariser les parties de recouvrement 133 et 135 à la membrane 113 et/ou aux électrodes 111,112 respectivement.

Avantageusement, on détermine la position de la bordure de la couche de diffusion gazeuse 21 par rapport aux renforts 131. On peut par exemple déterminer la position d'un ou plusieurs coins de la couche de diffusion gazeuse 21, par exemple au moyen d'une caméra. Une mesure de position par une caméra permet typiquement d'obtenir une précision de mesure de l'ordre de 100µm. On détermine ensuite par calcul une position par rapport à la position déterminée de la couche de diffusion gazeuse 21, à laquelle une ou plusieurs ouvertures doivent être réalisées à travers les parties d'extension des renforts 131 et 132. La position d'une ou plusieurs ouvertures peut par exemple être définie avec un décalage donné par rapport à la bordure de la couche de diffusion gazeuse 21. Avantageusement, on détermine également la position par rapport à la position déterminée de la couche de diffusion gazeuse 21, à laquelle un contour périphérique des renforts 131 et 132 doit être réalisé. Avantageusement, on peut prendre en compte la position des couches de diffusion gazeuse 21 et 22 afin de déterminer la position des ouvertures et/ou du contour périphérique.

Ainsi, on peut adapter la position des ouvertures et du contour périphérique des renforts 131 et 132, de sorte que les couches de diffusion gazeuse ne chevaucheront pas des joints placés en contact avec les renforts 131 et 132, même en présence de dispersions de positionnement des couches de diffusion gazeuse 21 et 22. Un tel positionnement permet de limiter la distance entre une ouverture et une couche de diffusion gazeuse lors de la conception. La densité de puissance volumique de l'assemblage membrane/électrodes est ainsi accrue.

À l'étape illustrée à la figure 5, les parties d'extension 135 et 136 sont encore indépendantes. Les parties d'extension 135 et 136 sont maintenues en contact par tous moyens appropriés, par exemple par des actionneurs pneumatiques. Les parties d'extension 135 et 136 maintenues en contact sont avantageusement dépourvues d'adhésif. Un faisceau laser 20 est appliqué par une tête de découpe 2 sur la superposition des parties d'extension 135 et 136. De façon simultanée, le faisceau laser 20 procède :
- à la découpe d'une ouverture 40 à travers la superposition des parties d'extension 135 et 136 ; et
- à la soudure des parties d'extension 135 et 136 en bordure de l'ouverture 40.

Le cas échéant, l'ouverture 40 est découpée à une position déterminée par rapport à la position de la bordure de la couche de diffusion gazeuse 21 et/ou 22. Une ou plusieurs ouvertures 40 peuvent être définies, par exemple pour un écoulement de liquide de refroidissement, pour un écoulement d'un réactif gazeux (ou d'un liquide à électrolyser pour un électrolyseur), ou pour le passage d'éléments de centrage par rapport à un empilement d'assemblages membrane/électrodes.

Un tel procédé permet de réduire notablement le nombre d'étapes du procédé de fabrication en vue de solidariser les renforts 131 et 132 et d'obtenir une étanchéité à la bordure des ouvertures 40.

Par ailleurs, ce procédé permet de se dispenser de l'utilisation d'adhésif pour solidariser mutuellement les renforts 131 et 132 et assurer l'étanchéité à la bordure des ouvertures 40. L'absence d'adhésif permet de réduire le coût de fabrication de l'assemblage membrane/électrodes 110 et permet également d'éviter d'appliquer des solvants d'un adhésif sur les renforts 131 et 132. Par ailleurs, contrairement au cas de l'utilisation d'un adhésif, la réalisation des ouvertures 40 selon un tel procédé ne fragilise pas la solidarisation entre les renforts 131 et 132, et la solidarisation des renforts 131 et 132 n'altère pas la géométrie des ouvertures 40 avec un éventuel débordement d'adhésif. Par ailleurs, on peut noter que plus le nombre d'ouvertures 40 est important, plus la résistance mécanique de la liaison entre les renforts 131 et 132 est importante.

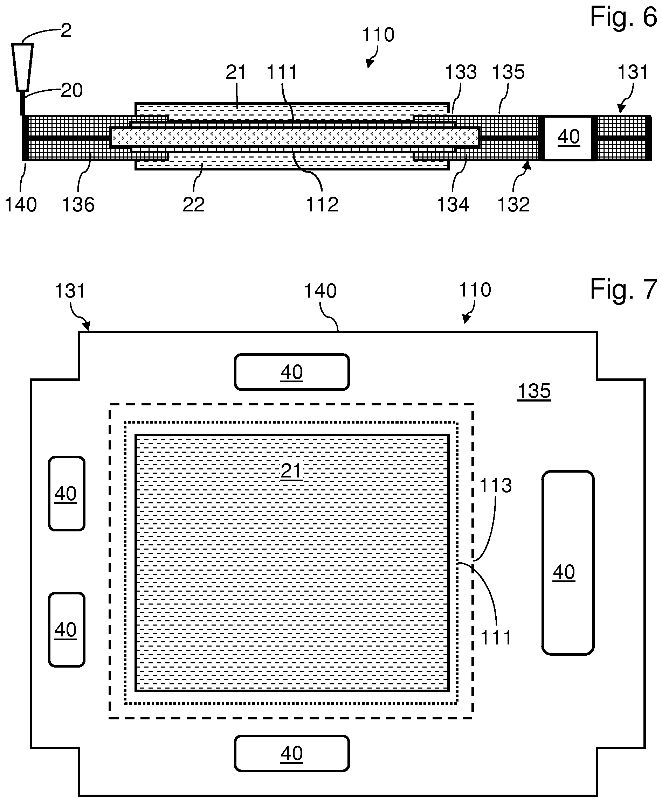

À l'étape illustrée à la figure 6, les parties d'extension 135 et 136 sont encore maintenues en contact. Le faisceau laser 20 est appliqué par la tête de découpe 2 sur la superposition des parties d'extension 135 et 136. De façon simultanée, le faisceau laser 20 procède :
- à la découpe d'un contour périphérique 140 à travers la superposition des parties d'extension 135 et 136 ; et
- à la soudure des parties d'extension 135 et 136 en bordure du contour périphériques 140.

Ainsi, une étanchéité est obtenue sur tout le contour périphérique 140 des renforts 131 et 132 durant l'étape de découpe de ce contour périphérique 140.

Le cas échéant, le contour périphérique 140 est découpé à une position déterminée par rapport à la position de la bordure de la couche de diffusion gazeuse 21 et/ou 22.

La figure 7 est une vue de dessus d'un exemple d'assemblage membrane/électrodes 110 à l'issue de la découpe du contour périphérique 140.

Dans l'exemple, le contour périphérique 140 est ménagé postérieurement à l'ouverture 40. On peut cependant également envisager que le contour périphérique 140 soit réalisé préalablement à la réalisation d'une ou plusieurs ouvertures 40.

Les renforts 131 et 132 renforcent l'assemblage membrane/électrodes notamment au niveau d'arrivées de gaz et de liquide de refroidissement, matérialisées par des ouvertures 40. Les renforts 131 et 132 facilitent également la manipulation de l'assemblage membrane/électrodes 110 lors de l'assemblage d'un empilement d'une pile à combustible. Les renforts 131 et 132 limitent également les variations dimensionnelles de la membrane 113 en fonction de la température et de l'humidité.

Les parties d'extension 135 et 136 soudées limitent le phénomène de perméation de gaz à l'origine d'une détérioration de l'assemblage membrane/électrodes. En effet, les ouvertures 40 sont ménagées dans les parties d'extension 135 et 136 et non pas à travers la membrane 113.

Les parties d'extension 135 et 136 sont réalisées en matériau polymère pour permettre la découpe et la soudure par le faisceau laser 20. Avantageusement, les matériaux polymère sont choisis parmi le PET, le PTFE, le FEP, l'ETFE, le PVF (dont le nom commercial est Tedlar). Le renfort 131 et/ou le renfort 132 peuvent bien entendu être réalisés d'un seul tenant en un même matériau.

Les renforts 131 et 132 utilisés présentent avantageusement les propriétés suivantes :
- une épaisseur comprise entre 20 et 100µm, de préférence comprise entre 40 et 60 µm, et de préférence de 50 µm. Des essais ont montré que de telles épaisseurs étaient particulièrement appropriées pour favoriser la découpe et la soudure par le faisceau laser 20 ;
- une rugosité inférieure à 3µm, de préférence inférieure à 1µm. Des essais ont montré qu'une telle rugosité favorisait la soudure en bordure des ouvertures 40 réalisées.

Un faisceau laser d'une puissance comprise entre 50 et 150 W, et de préférence égale à 100 W s'avère particulièrement avantageuse pour procéder aux étapes de découpe/soudure en bordure des ouvertures 40 et/ou du contour périphérique 140. La lentille de concentration du faisceau laser 20 est avantageusement placée à une distance comprise entre 6 et 8 mm de la superposition des parties d'extension 135 et 136, en conservant une même distance focale du faisceau, de sorte que la zone de découpe du faisceau soit élargie. La distance focale du faisceau peut par exemple être comprise entre 4 et 6mm.

Une telle distance entre la lentille de concentration et la superposition des parties d'extension 135 et 136 est supérieure à la distance usuellement utilisée pour procéder à la découpe d'un film polymère, qui est usuellement égale à la distance focale du faisceau laser 20. Avantageusement, le point focal du faisceau laser 20 est positionné entre 1 et 3 mm au-dessus de la superposition des parties d'extension 135 et 136. On peut aussi utiliser l'inégalité suivante : 1,2*Df <DI< 1,5*Df, avec Df la distance focale du faisceau laser 20 et DI la distance entre la lentille de concentration et la superposition. De tels paramètres favorisent la soudure des parties d'extension 135 et 136 en bordure de découpe.

## Revendications

1. Procédé de fabrication d'un assemblage membrane/électrodes (110), comprenant :
- la fourniture d'une membrane échangeuse de protons comportant une première électrode (111) sur une première face et une deuxième électrode (112) sur une deuxième face ;
- le placement d'un premier renfort (131) de sorte qu'une partie de recouvrement (133) de ce premier renfort se superpose à la périphérie de la membrane échangeuse de protons, et de sorte qu'une partie d'extension (135) du premier renfort en matériau polymère s'étende latéralement au-delà de la membrane échangeuse de protons;
- le placement d'un deuxième renfort (132) de sorte qu'une partie de recouvrement (134) de ce deuxième renfort se superpose à la périphérie de la membrane échangeuse de protons, et de sorte qu'une partie d'extension (136) de ce deuxième renfort s'étende latéralement au-delà de la membrane échangeuse de protons et se superpose à la partie d'extension du premier renfort ;
- maintien d'un contact entre les parties d'extension (134,136) des premier et deuxième renforts non solidarisés, et application d'un faisceau laser (20) sur la superposition des parties d'extension de façon à délimiter une ouverture (40) à travers les parties d'extension et de façon à souder les parties d'extension en bordure de cette ouverture.

2. Procédé de fabrication selon la revendication 1, dans lequel les parties d'extension (134,136) maintenues en contact sont dépourvues d'adhésif.

3. Procédé de fabrication selon la revendication 1 ou 2, dans lequel lesdits matériaux polymère sont choisis parmi le PET, le PTFE, le FEP, l'ETFE, le PVF.

4. Procédé de fabrication selon l'une quelconque des revendications précédentes, dans lequel les faces des parties d'extension (134,136) maintenues en contact présentent une rugosité inférieure à 1 µm.

5. Procédé de fabrication selon l'une quelconque des revendications précédentes, dans lequel lesdits renforts (131,132) présentent une épaisseur comprise entre 25 et 100 µm, de préférence comprise entre 40 et 60 µm.

6. Procédé de fabrication selon l'une quelconque des revendications précédentes, dans lequel le faisceau laser (20) appliqué présente une puissance comprise entre 50 et 150 W.

7. Procédé de fabrication selon l'une quelconque des revendications précédentes, dans lequel le faisceau laser (20) appliqué présente une distance focale comprise entre 4 à 6 mm.

8. Procédé de fabrication selon la revendication 7, dans lequel le point focal du faisceau laser (20) appliqué est positionné entre 1 et 3 mm au-dessus de la superposition des parties d'extension (134,136) des renforts.

9. Procédé de fabrication selon l'une quelconque des revendications précédentes, comprenant en outre des étapes de :
- de placement d'une couche de diffusion gazeuse (21) en contact avec la première électrode (111) à travers une ouverture médiane (137) de la partie de recouvrement (133) du premier renfort (131) ;
- détermination de la position d'une bordure de la couche de diffusion gazeuse (21) par rapport au premier renfort (131) ;
- détermination d'une position de découpe d'une ouverture en fonction de la position déterminée pour la bordure de la couche de diffusion gazeuse (21) ;
- ladite application du faisceau laser (20) étant mise en oeuvre pour réaliser ladite ouverture (40) à la position de découpe déterminée.

10. Procédé de fabrication selon la revendication 9, dans lequel la détermination de la position de la bordure est précédée d'une étape de solidarisation de la couche de diffusion gazeuse (21) à ladite première électrode (111).

11. Procédé de fabrication selon l'une quelconque des revendications précédentes, comprenant en outre une étape d'application d'un faisceau laser (20) sur la superposition des parties d'extension de façon à découper un contour périphérique (140) à travers les parties d'extension et de façon à souder les parties d'extension en bordure de ce contour périphérique.

## Patentansprüche

1. Verfahren zur Herstellung einer Membran/Elektroden-Anordnung (110), das enthält:
- die Bereitstellung einer Protonenaustauschmembran, die eine erste Elektrode (111) auf einer ersten Seite und eine zweite Elektrode (112) auf einer zweiten Seite aufweist;
- die Platzierung einer ersten Verstärkung (131) derart, dass ein Überdeckungsteil (133) dieser ersten Verstärkung den Umfang der Protonenaustauschmembran überlagert, und dass ein Erweiterungsteil (135) der ersten Verstärkung aus Polymermaterial sich seitlich über die Protonenaustauschmembran hinaus erstreckt;
- die Platzierung einer zweiten Verstärkung (132) derart, dass ein Überdeckungsteil (134) dieser zweiten Verstärkung den Umfang der Protonenaustauschmembran überlagert, und dass ein Erweiterungsteil (136) dieser zweiten Verstärkung sich seitlich über die Protonenaustauschmembran hinaus erstreckt und den Erweiterungsteil der ersten Verstärkung überlagert;
- Halt eines Kontakts zwischen den Erweiterungsteilen (134, 136) der ersten und zweiten nicht fest verbundenen Verstärkungen, und Anwenden eines Laserstrahls (20) auf die Überlagerung der Erweiterungsteile, um eine Öffnung (40) durch die Erweiterungsteile hindurch zu begrenzen und um die Erweiterungsteile am Rand dieser Öffnung zu schweißen.

2. Herstellungsverfahren nach Anspruch 1, wobei die in Kontakt gehaltenen Erweiterungsteile (134, 136) keinen Kleber aufweisen.

3. Herstellungsverfahren nach Anspruch 1 oder 2, wobei die Polymermaterialien aus PET, PTFE, FEP, ETFE, PVF ausgewählt werden.

4. Herstellungsverfahren nach einem der vorhergehenden Ansprüche, wobei die in Kontakt gehaltenen Seiten der Erweiterungsteile (134, 136) eine Rauigkeit von weniger als 1 µm aufweisen.

5. Herstellungsverfahren nach einem der vorhergehenden Ansprüche, wobei die Verstärkungen (131, 132) eine Dicke zwischen 25 und 100 µm, vorzugsweise zwischen 40 und 60 µm aufweisen.

6. Herstellungsverfahren nach einem der vorhergehenden Ansprüche, wobei der angewendete Laserstrahl (20) eine Leistung zwischen 50 und 150 W aufweist.

7. Herstellungsverfahren nach einem der vorhergehenden Ansprüche, wobei der angewendete Laserstrahl (20) eine Brennweite zwischen 4 und 6 mm aufweist.

8. Herstellungsverfahren nach Anspruch 7, wobei der Brennpunkt des angewendeten Laserstrahls (20) zwischen 1 und 3 mm oberhalb der Überlagerung der Erweiterungsteile (134, 136) der Verstärkungen positioniert ist.

9. Herstellungsverfahren nach einem der vorhergehenden Ansprüche, das außerdem die folgenden Schritte enthält:
- Platzierung einer Gasdiffusionsschicht (21) in Kontakt mit der ersten Elektrode (111) durch eine Mittelöffnung (137) des Überdeckungsteils (133) der ersten Verstärkung (131) hindurch;
- Bestimmung der Position eines Rands der Gasdiffusionsschicht (21) bezüglich der ersten Verstärkung (131);
- Bestimmung einer Schneideposition einer Öffnung abhängig von der für den Rand der Gasdiffusionsschicht (21) bestimmten Position;
- wobei die Anwendung des Laserstrahls (20) durchgeführt wird, um die Öffnung (40) an der bestimmten Schneideposition herzustellen.

10. Herstellungsverfahren nach Anspruch 9, wobei vor der Bestimmung der Position des Rands ein Schritt der festen Verbindung der Gasdiffusionsschicht (21) mit der ersten Elektrode (111) liegt.

11. Herstellungsverfahren nach einem der vorhergehenden Ansprüche, das außerdem einen Schritt der Anwendung eines Laserstrahls (20) auf die Überlagerung der Erweiterungsteile enthält, um eine Umfangskontur (140) durch die Erweiterungsteile hindurch auszuschneiden und um die Erweiterungsteile am Rand dieser Umfangskontur zu schweißen.

## Claims

1. Method for manufacturing a membrane/electrode assembly (110), comprising:
- the provision of a proton exchange membrane comprising a first electrode (111) on a first side and a second electrode (112) on a second side;
- the placement of a first reinforcement (131) so that an overlapping part (133) of this first reinforcement is superposed over the periphery of the proton exchange membrane, and so that an extension part (135) of the first reinforcement made of a polymer material extends laterally beyond the proton exchange membrane;
- the placement of a second reinforcement (132) so that an overlapping part (134) of this second reinforcement is superposed over the periphery of the proton exchange membrane, and so that an extension part (136) of this second reinforcement extends laterally beyond the proton exchange membrane and is superposed over the extension part of the first reinforcement;
- the maintenance of contact between the extension parts (134, 136) of the first and second non-fixed reinforcements, and the application of a laser beam (20) to the superposition of the extension parts in such a way as to define an opening (40) through the extension parts and in such a way as to weld the extension parts at the edge of this opening.

2. Manufacturing method according to Claim 1, in which the extension parts (134, 136) that are maintained in contact are without adhesive.

3. Method according to Claim 1 or 2, in which said polymer materials are chosen from among PET, PTFE, FEP, ETFE, PVF.

4. Manufacturing method according to any one of the preceding claims, in which the sides of the extension parts (134, 136) that are maintained in contact have a roughness that is less than 1 µm.

5. Manufacturing method according to any one of the preceding claims, in which said reinforcements (131, 132) have a thickness that is between 25 and 100 µm, preferably between 40 and 60 µm.

6. Manufacturing method according to any one of the preceding claims, in which the power of the applied laser beam (20) is between 50 and 150 W.

7. Manufacturing method according to any one of the preceding claims, in which the focal length of the applied laser beam (20) is between 4 and 6 mm.

8. Manufacturing method according to Claim 7, in which the focal point of the applied laser beam (20) is positioned between 1 and 3 mm above the superposition of the extension parts (134, 136) of the reinforcements.

9. Manufacturing method according to any one of the preceding claims, additionally comprising the following steps:
- the placement of a gas diffusion layer (21) in contact with the first electrode (111) through a median opening (137) of the overlapping part (133) of the first reinforcement (131);
- the determination of the position of an edge of the gas diffusion layer (21) with respect to the first reinforcement (131);
- the determination of a cutting position of an opening depending on the position that is determined for the edge of the gas diffusion layer (21);
- said application of the laser beam (20) being implemented in order to produce said opening (40) at the determined cutting position.

10. Manufacturing method according to Claim 9, in which the determination of the position of the edge is preceded by a step of fixing the gas diffusion layer (21) to said first electrode (111).

11. Manufacturing method according to any one of the preceding claims, additionally comprising a step of applying a laser beam (20) to the superposition of the extension parts in such a way as to cut a peripheral contour (140) through the extension parts and in such a way as to weld the extension parts at the edge of this peripheral contour.
